(19) Europäisches Patentamt
European Patent Office
Office européen des brevets

(11) EP 4 212 331 A1

(12) # EUROPEAN PATENT APPLICATION
published in accordance with Art. 153(4) EPC

(43) Date of publication:
**19.07.2023 Bulletin 2023/29**

(21) Application number: **21866807.7**

(22) Date of filing: **08.09.2021**

(51) International Patent Classification (IPC):
***B32B 17/10** (2006.01)* ***B32B 27/30** (2006.01)*
***B32B 27/36** (2006.01)* ***C03C 27/12** (2006.01)*

(52) Cooperative Patent Classification (CPC):
**B32B 17/00; B32B 17/10; B32B 27/30; B32B 27/36**

(86) International application number:
**PCT/JP2021/033060**

(87) International publication number:
**WO 2022/054849 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.09.2020 JP 2020152426**

(71) Applicant: **SEKISUI CHEMICAL CO., LTD.**
**Osaka-shi**
**Osaka**
**530-8565 (JP)**

(72) Inventors:
- **CHOU, Kinryou**
**Koka-shi, Shiga 528-8585 (JP)**
- **OOTA, Yuusuke**
**Koka-shi, Shiga 528-8585 (JP)**
- **TAKAI, Minako**
**Koka-shi, Shiga 528-8585 (JP)**

(74) Representative: **Ter Meer Steinmeister & Partner Patentanwälte mbB**
**Nymphenburger Straße 4**
**80335 München (DE)**

(54) **LAMINATED GLASS INTERLAYER FILM, LAMINATED GLASS, AND LAMINATE FOR LAMINATED GLASS**

(57) An interlayer film 10 for laminated glass comprises a first resin layer 11, a second resin layer 12, and a plastic layer 13 disposed between the first and second resin layers 11 and 12, wherein: the first resin layer 11 comprises a thermoplastic resin, and has a thickness of 900 μm or less, and a magnesium element content of less than 25 ppm; the second resin layer 12 comprises a thermoplastic resin, and has a total content of magnesium element and potassium element of 25 ppm or more; and the interlayer film for laminated glass satisfies requirements to have a mean break height (MBH) of 5 m or more in a falling ball test conducted in accordance with JIS R 3212: 2015 for two glass sheets each having a thickness of 2.5 mm laminated via the interlayer film 10 for laminated glass, in both cases with a water content of the interlayer film for laminated glass of 0.4% and 2.0%.

Fig. 1

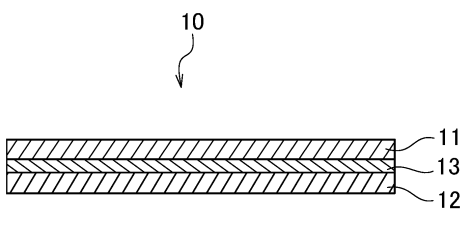


EP 4 212 331 A1

## Description

### Technical Field

The present invention relates to an interlayer film for laminated glass, a laminated glass, and a laminate for laminated glass used for forming an interlayer film for laminated glass.

### Background Art

A laminated glass is safe because glass fragments are less likely to scatter even when damaged by an external impact, being widely used as a windshield, side glass, rear glass and roof glass of vehicles such as automobiles, and a window of aircrafts, buildings, etc. As the laminated glass, an integrated one in which an interlayer film for laminated glass containing a resin component such as polyvinyl acetal resin is interposed between a pair of glass sheets is widely known.

The interlayer film for laminated glass may be multi-layered in order to impart various functions. For example, in PTL1, an interlayer film for laminated glass including a plastic layer having a Young's modulus of 1 GPa or more and a first and a second resin layers laminated on both surfaces of the plastic layer is disclosed. In PTL1, it is shown that the structure described above enhances the handleability and penetration resistance of the interlayer film for laminated glass, and further, reduces the size of fragments after breakage.

Further, in PTL2 to PTL4, as an interlayer film for laminated glass having both high heat shielding property and high visible light transmittance, disclosed is an interlayer film including an infrared reflecting layer and a first and a second layers disposed on both sides of the infrared reflecting layer, respectively, with metal oxide particles or the like blended in the second resin layer.

### Citation List

#### Patent Literature

PTL1: WO 2014/021407
PTL2: WO 2014/021406
PTL3: JP 2015-196612 A
PTL4: WO 2015/115626

### Summary of Invention

#### Technical Problem

In an interlayer film for laminated glass, for example, as disclosed in PTL4, an adhesive force adjusting agent such as a potassium salt or a magnesium salt is usually blended to adjust the adhesive force with glass. On the other hand, an interlayer film for laminated glass is used in various environments, and may be used not only in a low humidity environment but also in a high humidity environment.

However, a potassium salt and a magnesium salt have properties of adsorbing water well, and an interlayer film for laminated glass in which a potassium salt or a magnesium salt is blended allows the water content to increase when used in a high humidity environment, so that the adhesive force tends to increase. Therefore, it becomes difficult to control the adhesive force in a high humidity environment, and problems such as decrease in penetration resistance may occur.

Therefore, an object of the present invention is to improve the penetration resistance of a multilayer interlayer film for laminated glass having three or more layers under both high humidity and low humidity.

#### Solution to problem

As a result of extensive study by the present inventors, it has been found that the problem may be solved by, in an interlayer film for laminated glass having a first and a second resin layers and a plastic layer disposed therebetween, controlling the thickness of the resin layers, and the content of magnesium elements or the total content of magnesium element and potassium element in each resin layer within predetermined ranges, so that the following present invention has been completed. That is, the present invention provides the following items [1] to [31].

[1] An interlayer film for laminated glass, comprising a first resin layer, a second resin layer, and a plastic layer disposed between the first and second resin layers, wherein

the first resin layer comprises a thermoplastic resin, and has a thickness of 900 μm or less, and a magnesium element content of less than 25 ppm,
the second resin layer comprises a thermoplastic resin, and has a total content of magnesium element and potassium element of 25 ppm or more, and
the interlayer film for laminated glass satisfies requirements to have a mean break height (MBH) of 5 m or more in a falling ball test conducted in accordance with JIS R 3212: 2015 for two glass sheets each having a thickness of 2.5 mm laminated via the interlayer film for laminated glass, in both cases with a water content of the interlayer film for laminated glass of 0.4% and 2.0%.

[2] The interlayer film for laminated glass according to item [1], wherein the first resin layer has a total content of magnesium element and potassium element of less than 25 ppm.
[3] The interlayer film for laminated glass according to item [2], wherein the first resin layer has a thickness of 800 μm or less and a total content of magnesium element and potassium element of 20 ppm or less.
[4] The interlayer film for laminated glass according to any one of items [1] to [3], wherein the second resin layer has a thickness of 900 μm or less.
[5] The interlayer film for laminated glass according to any one of items [1] to [4], wherein the second resin layer has a thickness of 100 μm or more.
[6] The interlayer film for laminated glass according to any one of items [1] to [5], wherein the second resin layer has a thickness of 350 μm or more and a total content of magnesium element and potassium element of 30 ppm or more.
[7] The interlayer film for laminated glass according to any one of items [1] to [6], wherein the plastic layer has a thickness of 30 μm or more and 200 μm or less.
[8] The interlayer film for laminated glass according to any one of items [1] to [7], wherein the first resin layer comprises a light emitting material having a terephthalic acid ester structure.
[9] The interlayer film for laminated glass according to any one of items [1] to [8], wherein the first resin layer comprises a phosphoric acid ester compound.
[10] The interlayer film for laminated glass according to any one of items [1] to [9], wherein the first resin layer comprises heat shielding particles.
[11] The interlayer film for laminated glass according to item [10], wherein the heat shielding particles are at least one selected from the group consisting of metal oxide particles and lanthanum hexaboride particles.
[12] The interlayer film for laminated glass according to any one of items [1] to [11], wherein a difference between the total content in the first resin layer and the total content in the second resin layer is 10 ppm or more and 300 ppm or less.
[13] The interlayer film for laminated glass according to any one of items [1] to [12], wherein the thermoplastic resins contained in the first and second resin layers respectively are at least one selected from the group consisting of a polyvinyl acetal resin, an ethylene-vinyl acetate copolymer resin, an ionomer resin, a polyurethane resin, and a thermoplastic elastomer.
[14] The interlayer film for laminated glass according to any one of items [1] to [13], wherein the thermoplastic resin contained in the first and second resin layers is a polyvinyl acetal resin.
[15] The interlayer film for laminated glass according to any one of items [1] to [14], wherein the plastic layer comprises at least one selected from the group consisting of a polyester resin film and an acrylic resin film.
[16] The interlayer film for laminated glass according to any one of items [1] to [15], wherein the plastic layer comprises a polyethylene terephthalate film.
[17] The interlayer film for laminated glass according to any one of items [1] to [16], wherein the content rate of magnesium elements is higher than the content rate of potassium elements in the second resin layer.
[18] The interlayer film for laminated glass according to any one of items [1] to [17], wherein the thickness of the first resin layer is 100 μm or more.
[19] The interlayer film for laminated glass according to any one of items [1] to [18], wherein the second resin layer comprises an adhesive force adjusting agent.
[20] The interlayer film for laminated glass according to item [19], wherein the adhesive force adjusting agent is at least one metal salt selected from the group consisting of a potassium salt and a magnesium salt.
[21] The interlayer film for laminated glass according to any one of items [1] to [20], wherein the first resin layer comprises none or less than 0.005 parts by mass of an adhesive force adjusting agent relative to 100 parts by mass of the thermoplastic resin.
[22] The interlayer film for laminated glass according to any one of items [1] to [21], wherein the first resin layer

comprises a light emitting material.

[23] The interlayer film for laminated glass according to any one of items [1] to [22], wherein the second resin layer comprises substantially no light emitting material having a terephthalic acid ester structure.

[24] The interlayer film for laminated glass according to any one of items [1] to [23], wherein the second resin layer comprises substantially no phosphoric acid ester compound.

[25] The interlayer film for laminated glass according to any one of items [1] to [24], wherein both the first and second resin layers comprise a plasticizer.

[26] The interlayer film for laminated glass according to any one of items [1] to [25], wherein the plastic layer comprises substantially no plasticizer.

[27] A laminated glass comprising the interlayer film for laminated glass according to any one of items [1] to [26], a first glass sheet, and a second glass sheet, wherein the interlayer film for laminated glass is disposed between the first glass sheet and the second glass sheet.

[28] A laminate for laminated glass used for lamination on a first resin layer to form an interlayer film for laminated glass, the laminate comprising

a plastic layer and a second resin layer laminated on one surface of the plastic layer, wherein
the first resin layer comprises a thermoplastic resin, and has a thickness of 900 μm or less, and a magnesium element content of less than 25 ppm,
the second resin layer comprises a thermoplastic resin, and has a total content of magnesium element and potassium element of 25 ppm or more, and
the laminate for laminated glass satisfies requirements to have a mean break height (MBH) of 5 m or more in a falling ball test conducted in accordance with JIS R 3212: 2015 for two glass sheets each having a thickness of 2.5 mm laminated via the interlayer film for laminated glass formed by laminating the laminate for laminated glass on the first resin layer such that the plastic layer is disposed between the first and second resin layers, in both cases with a water content of the interlayer film for laminated glass of 0.4% and 2.0%.

[29] A set comprising the laminate for laminated glass according to item [28] and the first resin layer.

[30] A laminate for laminated glass used for lamination on a second resin layer to form an interlayer film for laminated glass, the laminate comprising

a plastic layer and a first resin layer laminated on one surface of the plastic layer, wherein
the first resin layer comprises a thermoplastic resin, and has a thickness of 900 μm or less, and a magnesium element content of less than 25 ppm,
the second resin layer comprises a thermoplastic resin, and has a total content of magnesium element and potassium element of 25 ppm or more, and
the laminate for laminated glass satisfies requirements to have a mean break height (MBH) of 5 m or more in a falling ball test conducted in accordance with JIS R 3212: 2015 for two glass sheets each having a thickness of 2.5 mm laminated via the interlayer film for laminated glass formed by laminating the laminate for laminated glass on the second resin layer such that the plastic layer is disposed between the first and second resin layers, in both cases with a water content of the interlayer film for laminated glass of 0.4% and 2.0%.

[31] A set comprising the laminate for laminated glass according to item [30] and the second resin layer.

Advantageous Effects of Invention

According to the present invention, a multilayer interlayer film for laminated glass having three or more layers may have improved penetration resistance under both high humidity and low humidity.

Brief Description of Drawings

[Fig. 1] Fig. 1 is a cross-sectional view showing an interlayer film for laminated glass in an embodiment of the present invention.

[Fig. 2] Fig. 2 is a cross-sectional view showing a laminated glass in an embodiment of the present invention.

Description of Embodiments

<Interlayer film for laminated glass>

Hereinafter, the present invention will be described in detail.

The interlayer film for laminated glass of the present invention (hereinafter, simply referred to as "interlayer film" in some cases) is an interlayer film having three or more layers. As shown in Fig. 1, an interlayer film 10 of the present invention comprises a first resin layer 11 comprising a thermoplastic resin, a second resin layer 12 comprising a thermoplastic resin, and a plastic layer 13 disposed therebetween. The first and second resin layers 11 and 12 may be laminated directly on the plastic layer 13, respectively, or may be laminated on the plastic layer 13 through another layer such as an adhesive layer.

[Total content of magnesium element and potassium element]

In the present invention, the first resin layer has a magnesium element content of less than 25 ppm, and the second resin layer has a total content of magnesium element and potassium element (hereinafter, simply referred to as "total metal content" in some cases) of 25 ppm or more. The interlayer film for laminated glass of the present invention having the above configuration satisfies requirements to have a mean break height (MBH) of 5 m or more in a falling ball test to be described later in both cases with a water content of 0.4% and 2.0%, so that penetration resistance under both high humidity and low humidity may be improved. Although the principle thereof is not clear, the reason may be presumed as follows.

The water content of the resin layer is low in a low humidity environment, and with a high total content of magnesium element and potassium element, the adhesive force to the glass sheet decreases due to the action of these metal elements. Therefore, having a total metal content in the second resin layer of 25 ppm or more, the interlayer film for laminated glass of the present invention allows the adhesive force of the laminated glass to another glass sheet to be adjusted at a low level in low humidity environment. As a result, the interlayer film of the present invention maintains an appropriate adhesive force to the two glass sheets and has high penetration resistance in low humidity environment.

On the other hand, with a high water content in high humidity environment, the second resin layer having a high total content of the metals has a high adhesive force to the glass sheet. However, since the first resin layer has a low magnesium element content, the adhesive force to the glass sheet in high humidity environment may be lowered, so that the interlayer film of the present invention may prevent the adhesive force to the two glass sheets from becoming too high even in high humidity environment, while having an improved penetration resistance.

From the viewpoint of preventing the adhesive force of the interlayer film to a glass sheet from becoming too high and improving the penetration resistance in high humidity environment, the magnesium element content in the first resin layer is preferably 20 ppm or less, more preferably 15 ppm or less, still more preferably 10 ppm or less, and further more preferably 5 ppm or less. The lower limit of magnesium element content in the first resin layer is not particularly limited, and may be 0 ppm or more. In consideration of the amount of metal inevitably mixed, the lower limit is usually 0.1 ppm or more, and may be 0.5 ppm or more.

From the viewpoint of surely reducing the adhesive force of the first resin layer to a glass sheet in high humidity environment, the total content of magnesium element and potassium element (total metal content) in the first resin layer is preferably less than 25 ppm, more preferably 20 ppm or less, still more preferably 15 ppm or less, further more preferably 10 ppm or less, and particularly preferably 5 ppm or less. The lower limit of the total metal content in the first resin layer is not particularly limited, and may be 0 ppm or more. In consideration of the amount of metal inevitably mixed, the lower limit is usually 0.1 ppm or more and may be 0.5 ppm or more.

Further, from the viewpoint of appropriately reducing the adhesive force of the second resin layer to a glass sheet under low humidity and appropriately increasing the adhesive force of the second resin layer to a glass sheet under high humidity, the total metal content in the second layer is preferably 25 ppm or more, more preferably 30 ppm or more, still more preferably 35 ppm or more, and further more preferably 40 ppm or more. From the viewpoint of moisture resistance or the like, the total metal content in the second resin layer is preferably 300 ppm or less, more preferably 250 ppm or less, still more preferably 200 ppm or less, and further more preferably 150 pm or less.

Further, it is preferable that the difference between the total metal content in the first resin layer and the total metal content in the second resin layer be 10 ppm or more and 300 ppm or less. With a difference in the total metal contents of 10 ppm or more, the adhesive force to the two glass sheets is well balanced at an appropriate level in both high and low humidity environments, while the penetration resistance is easily maintained at a high level. Further, with a difference in the total metal contents of 300 ppm or less, the total metal content in the second resin layer is prevented from becoming larger than necessary, while the moisture resistance and the like are improved.

The difference in total metal contents is more preferably 15 ppm or more, still more preferably 20 ppm or more, further more preferably 25 ppm or more, further more preferably 30 ppm or more, and more preferably 200 ppm or less,

still more preferably 150 ppm or less, and further more preferably 100 ppm or less.

The content of magnesium elements and the content of potassium elements are the amount (mass) of magnesium (Mg) elements and potassium (K) elements contained in respective resin layers, which are measured by ICP emission spectroscopy. The total metal content is the total of magnesium (Mg) element content and potassium (K) element content in each resin layer.

It is preferable that the second resin layer contain at least one of magnesium elements and potassium elements derived from an adhesive force adjusting agent to be described below. However, a thermoplastic resin used for the second resin layer, an additive, various solvents used in a production process, etc. may usually contain magnesium elements and potassium elements as trace impurities. Accordingly, the second resin layer may contain not only those derived from the adhesive force adjusting agent but also magnesium elements, potassium elements, or both of them other than those derived from the adhesive force adjusting agent.

The first resin layer may contain the adhesive force adjusting agent described later, and therefore may contain at least one of magnesium elements and potassium elements derived from the adhesive force adjusting agent. However, similarly to the second resin layer, the first resin layer may usually contain magnesium elements, potassium elements, or both of them other than those derived from the adhesive force adjusting agent.

As described above, the second resin layer may contain both magnesium elements and potassium elements. In that case, in the second resin layer, the content rate of magnesium elements may be higher than the content rate of potassium elements, the content rate of potassium elements may be higher than the content rate of magnesium elements, or the content rates of both may be the same. However, it is preferable that in the second resin layer, the content rate of magnesium elements be higher than the content rate of potassium elements.

Similarly, the first resin layer may contain both magnesium elements and potassium elements, and in that case, in the first resin layer, the content rate of magnesium elements may be higher than the content rate of potassium elements, the content rate of potassium elements may be higher than the content rate of magnesium elements, or the content rate of both may be the same

[Penetration resistance]

The interlayer film of the present invention satisfies requirements to have a mean break height (MBH) of 5 m or more in a falling ball test conducted in accordance with JIS R 3212: 2015 for two glass sheets each having a thickness of 2.5 mm laminated via the interlayer film, in both cases with a water content of the interlayer film for laminated glass of 0.4% and 2.0%. The interlayer film of the present invention causes no penetration through the laminated glass in either case where the water content is 0.4% or 2.0% even for an MBH of 5 m in the falling ball test, so that the penetration resistance is excellent in both high humidity and low humidity environments.

[Thickness of each layer]

In the interlayer film of the present invention, the thickness of the first resin layer is 900 μm or less. With a thickness of the first resin layer of more than 900 μm, the thickness of the interlayer film becomes larger than necessary, so that the practicality is lowered. Further, with a thickness of more than 900 μm, it becomes easy to improve the penetration resistance without adjusting the total metal contents in the first and second resin layers as described above. Therefore, it becomes difficult to exert the effect of adjusting the magnesium content in the first resin layer and the total metal contents in the first and second resin layers within the predetermined ranges.

From these viewpoints, the thickness of the first resin layer is preferably 800 μm or less, more preferably 700 μm or less, and still more preferably 600 μm or less. Incidentally, in the case where the first resin layer has a thickness of 800 μm or less and a total metal content of 20 ppm or less, the effect of the present invention is exhibited more efficiently.

The thickness of the first resin layer is preferably 100 μm or more, more preferably 200 μm or more, and still more preferably 350 μm or more, from the viewpoint of ensuring the penetration resistance, impact resistance, adhesiveness to glass, etc.

In the interlayer film of the present invention, the second resin layer has a thickness of, for example, 900 μm or less. With a thickness of the second resin layer of 900 μm or less, the interlayer film is prevented from having a thickness larger than necessary. With a thickness of 900 μm or less, the effect of improving the penetration resistance is easily exhibited through the adjustment of the magnesium content and the total metal content in each resin layer as described above.

From these viewpoints, the thickness of the second resin layer is preferably 850 μm or less, more preferably 800 μm or less, and still more preferably 780 μm or less.

The thickness of the second resin layer is preferably 100 μm or more, more preferably 200 μm or more, and still more preferably 350 μm or more, from the viewpoint of ensuring the penetration resistance, impact resistance, adhesiveness to glass, etc. Incidentally, in the case where the second resin layer has a thickness of 350 μm or more

and a total metal content of 30 ppm or more, the penetration resistance is more effectively improved.

It is preferable that the plastic layer have a thickness of 30 μm or more and 200 μm or less. With a thickness of 30 μm or more, the penetration resistance of the interlayer film may be easily improved. Further, the barrier performance of the plastic layer may be easily improved. With a thickness of 200 μm or less, the flexibility of the interlayer film is easily secured to improve the impact resistance, etc. From these viewpoints, the thickness of the plastic layer is more preferably 40 μm or more, still more preferably 45 μm or more, and more preferably 150 μm or less, still more preferably 120 μm or less.

Further, it is preferable that the thickness of the plastic layer be smaller than the thickness of any of the first and second resin layers from the viewpoint of securing the flexibility, impact resistance and the like of the interlayer film.

The thickness of the entire interlayer film is, for example, 400 μm or more and 2000 μm or less. With a thickness of the entire interlayer film of 400 μm or more, the adhesiveness to a glass sheet, penetration resistance and the like are easily improved. Further, with a thickness of 2000 μm or less, use for laminated glass is practically easy. From these viewpoints, the thickness of the entire interlayer film is preferably 500 μm or more and 1700 μm or less, more preferably 600 μm or more and 1400 μm or less, and still more preferably 700 μm or more and 1250 μm or less.

[Thermoplastic resin]

The first resin layer contains a thermoplastic resin. The second resin layer contains a thermoplastic resin. Containing a thermoplastic resin, the first and second resin layers may easily function as an adhesive layer and have good adhesiveness to a glass sheet or a plastic layer.

The thermoplastic resin usable in the first and second resin layers is not particularly limited, and examples thereof include a polyvinyl acetal resin, an ethylene-vinyl acetate copolymer resin, an ionomer resin, a polyurethane resin, and a thermoplastic elastomer. With use of these resins, adhesiveness to a glass sheet is easily secured.

In each resin layer, one type of thermoplastic resin may be used alone, or two or more types may be used in combination.

Among the above, the thermoplastic resin is preferably at least one selected from the group consisting of a polyvinyl acetal resin and an ethylene-vinyl acetate copolymer resin. Since a thermoplastic resin exhibits excellent adhesiveness to glass when used in combination with a plasticizer, a polyvinyl acetal resin is more preferred. As the polyvinyl acetal resin, a polyvinyl butyral resin is preferred as described later.

Although the thermoplastic resin in the first resin layer and the thermoplastic resin in the second resin layer may be the same type of resin or different resins, from the viewpoint of ease of production, etc., it is preferable that the same type of resin be used.

Therefore, both the thermoplastic resin in the first and second resin layers are preferably a polyvinyl acetal resin or an ethylene-vinyl acetate copolymer resin, more preferably a polyvinyl acetal resin, and particularly preferably a polyvinyl butyral resin.

(Polyvinyl acetal resin)

The polyvinyl acetal resin used in each of the first and second resin layers is obtained by acetalizing a polyvinyl alcohol with an aldehyde. The polyvinyl alcohol may be obtained, for example, by saponifying a polyvinyl ester such as polyvinyl acetate. One type of polyvinyl acetal resin may be used alone or two or more types may be used in combination.

Although the aldehyde used for acetalization is not particularly limited, an aldehyde having 1 to 10 carbon atoms is preferably used, an aldehyde having 2 to 6 carbon atoms is more preferably used, and an aldehyde having 4 carbon atoms is still more preferably used.

The aldehyde having 1 to 10 carbon atoms is not particularly limited, and examples thereof include n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, and benzaldehyde. In particular, n-butyraldehyde, n-hexylaldehyde, and n-valeraldehyde are preferred, and n-butyraldehyde is more preferred. One of these aldehydes may be used alone or two or more may be used in combination.

As the polyvinyl alcohol, a polyvinyl alcohol having a saponification degree of 80 to 99.8 mol% is generally used. It is preferable that the polyvinyl alcohol have an average degree of polymerization of 500 or more and 4000 or less in order to adjust the average degree of polymerization of the polyvinyl acetal resin within a desired range. It is more preferable that the polyvinyl alcohol have an average degree of polymerization of 1000 or more and 3600 or less. The average degree of polymerization of polyvinyl alcohol is determined by a method based on JIS K6726 "Testing method for polyvinyl alcohol".

The number of carbon atoms of the acetal group contained in the polyvinyl acetal resin is not particularly limited, but is preferably 1 to 10, more preferably 2 to 6, and still more preferably 4. As the acetal group, specifically, a butyral group is particularly preferred, and therefore, as the polyvinyl acetal resin, a polyvinyl butyral resin is preferred.

The degree of acetalization of the polyvinyl acetal resin is preferably 40 mol% or more and 85 mol% or less. The degree of acetalization is more preferably 60 mol% or more and 75 mol% or less. The degree of acetalization means the degree of butyralization in the case where the acetal group is a butyral group and the polyvinyl acetal resin is a polyvinyl butyral resin.
The hydroxyl group content in the polyvinyl acetal resin is preferably 15 mol% or more and 35 mol% or less. With a hydroxyl group content of 15 mol% or more, the adhesiveness to a glass sheet or the like and the penetration resistance of the laminated glass, etc. are easily improved. Further, with a hydroxyl group content of 35 mol% or less, the laminated glass is prevented from becoming too rigid, for example. The hydroxyl group content in the polyvinyl acetal resin is more preferably 20 mol% or more and 33 mol% or less.
The degree of acetylation (acetyl group content) of the polyvinyl acetal resin is preferably 0.1 mol% or more and 20 mol% or less. With a degree of acetylation equal to or more than the lower limit described above, compatibility with a plasticizer or the like tends to be easily improved. Further, with a degree of acetylation equal to or less than the upper limit described above, the moisture resistance of each resin layer increases. From these viewpoints, the degree of acetylation is more preferably 0.3 mol% or more, still more preferably 0.5 mol% or more, and more preferably 10 mol% or less, still more preferably 5 mol% or less.
The hydroxyl group content, the degree of acetalization (degree of butyralization), and the degree of acetylation may be calculated from the results measured by a method based on JIS K6728 "Testing method for polyvinyl butyral".
The average degree of polymerization of the polyvinyl acetal resin is preferably 500 or more and 4000 or less. With an average degree of polymerization of 500 or more, the penetration resistance of the laminated glass is improved. With an average degree of polymerization of 4000 or less, the laminated glass is easily formed. The degree of polymerization is more preferably 1000 or more and 3600 or less. The average degree of polymerization of the polyvinyl acetal resin is the same as the average degree of polymerization of polyvinyl alcohol as raw material, and may be determined from the average degree of polymerization of polyvinyl alcohol.

(Ethylene-vinyl acetate copolymer resin)

The ethylene-vinyl acetate copolymer resin may be a non-crosslinked ethylene-vinyl acetate copolymer resin or a high-temperature crosslinked ethylene-vinyl acetate copolymer resin. As the ethylene-vinyl acetate copolymer resin, a modified ethylene-vinyl acetate resin such as a saponified product of ethylene-vinyl acetate copolymer and a hydrolysate of ethylene-vinyl acetate may also be used.
The ethylene-vinyl acetate copolymer resin has a vinyl acetate content measured in accordance with JIS K 6730 "Testing method for ethylene-vinyl acetate resin" or JIS K 6924-2: 1997 of preferably 10 mass% or more and 50 mass% or less, more preferably 20 mass% or more and 40 mass% or less. With a vinyl acetate content equal to or more than these lower limits, the adhesiveness to glass is enhanced, and when used for the laminated glass, the penetration resistance of the laminated glass tends to be improved. Further, with a vinyl acetate content equal to or less than these upper limits, the breaking strength of the resin layer is enhanced and the impact resistance of the laminated glass is improved.

(Ionomer resin)

The ionomer resin is not particularly limited, and various ionomer resins may be used. Specific examples thereof include an ethylene-based ionomer, a styrene-based ionomer, a perfluorocarbon-based ionomer, a telechelic ionomer, and a polyurethane ionomer. In particular, an ethylene-based ionomer is preferred from the viewpoints of improving the mechanical strength, durability, transparency, etc. of the laminated glass described below, and excellence in adhesiveness to glass.
As the ethylene-based ionomer, an ionomer of ethylene/unsaturated carboxylic acid copolymer is preferably used due to excellence in transparency and toughness. The ethylene/unsaturated carboxylic acid copolymer is a copolymer having at least a structural unit derived from ethylene and a structural unit derived from unsaturated carboxylic acid, and may have a structural unit derived from another monomer.
Examples of the unsaturated carboxylic acid include acrylic acid, methacrylic acid, and maleic acid. Acrylic acid and methacrylic acid are preferred, and methacrylic acid is particularly preferred. Examples of the other monomer include an acrylic acid ester, a methacrylic acid ester, and 1-butene.
The ethylene/unsaturated carboxylic acid copolymer has preferably 75 to 99 mol% of structural units derived from ethylene and 1 to 25 mol% of structural units derived from unsaturated carboxylic acid, based on 100 mol% of the total structural units of the copolymer.
The ionomer of the ethylene/unsaturated carboxylic acid copolymer is an ionomer resin obtained by neutralizing or cross-linking at least a part of the carboxyl groups of the ethylene/unsaturated carboxylic acid copolymer with metal ions. The degree of neutralization of the carboxyl group is usually 1 to 90%, preferably 5 to 85%.

Examples of the ion source in the ionomer resin include alkali metals such as lithium, sodium, potassium, rubidium and cesium, and polyvalent metals such as magnesium, calcium and zinc, and sodium and zinc are preferred.

The method for producing the ionomer resin is not particularly limited, and the ionomer resin may be produced by a conventionally known production method. For example, in the case where an ionomer of an ethylene/unsaturated carboxylic acid copolymer is used as the ionomer resin, for example, ethylene and unsaturated carboxylic acid are subjected to radical copolymerization at high temperature and high pressure to produce an ethylene/unsaturated carboxylic acid copolymer. Then, by reacting the ethylene/unsaturated carboxylic acid copolymer with a metal compound containing the ion source described above, an ionomer of the ethylene/unsaturated carboxylic acid copolymer may be produced.

(Polyurethane resin)

Examples of the polyurethane resin include a polyurethane obtained by reacting an isocyanate compound with a diol compound, and a polyurethane obtained by reacting an isocyanate compound with a diol compound and a chain length extender such as a polyamine. Further, the polyurethane resin may contain a sulfur atom. In that case, a part or all of the diols may be selected from the group consisting of polythiols and sulfur-containing polyols. The polyurethane resin allows the adhesiveness to organic glass to be improved. Therefore, the polyurethane resin is preferably used in the case where the glass sheet is made of organic glass.

(Thermoplastic elastomer)

Examples of the thermoplastic elastomer include a styrene-based thermoplastic elastomer and an aliphatic polyolefin. The styrene-based thermoplastic elastomer is not particularly limited, and known ones may be used. The styrene-based thermoplastic elastomer generally has a polymer block of styrene monomer as a hard segment and a conjugated diene compound polymer block or a hydrogenated block thereof as a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene-isoprene-styrene triblock copolymer, a styrene-butadiene-styrene triblock copolymer, and hydrogenated products thereof.

The aliphatic polyolefin may be a saturated aliphatic polyolefin or an unsaturated aliphatic polyolefin. The aliphatic polyolefin may be a polyolefin having a chain olefin as monomer or a polyolefin having a cyclic olefin as monomer. From the viewpoint of effectively enhancing the storage stability of the resin layer, the aliphatic polyolefin is preferably a saturated aliphatic polyolefin.

Examples of the material for the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decenes, cis-3-decene, trans-4-decene, cis-4-decene, trans-5-decene, cis-5-decene, 4-methyl-1-pentene, and vinylcyclohexane.

[Adhesive force adjusting agent]

As described above, the second resin layer has a total metal content of magnesium elements and potassium elements equal to or more than a certain level, and preferably contains an adhesive force adjusting agent in order to make the total metal content equal to or more than a certain level.

The adhesive force adjusting agent is preferably at least one metal salt selected from the group consisting of a potassium salt and a magnesium salt, and among these, a magnesium salt is preferred. The metal salt is more preferably a potassium salt of an organic acid having 2 to 16 carbon atoms or a magnesium salt of an organic acid having 2 to 16 carbon atoms. The metal salt is still more preferably a magnesium salt of a carboxylic acid having 2 to 16 carbon atoms or a potassium salt of a carboxylic acid having 2 to 16 carbon atoms.

The metal salt is not particularly limited, and examples thereof include magnesium acetate, potassium acetate, magnesium propionate, potassium propionate, magnesium 2-ethylbutyrate, potassium 2-ethylbutyrate, magnesium 2-ethylbutanoate, potassium 2-ethylbutanoate, magnesium 2-ethylhexanoate and potassium 2-ethylhexanoate. Hydrates of these may be also used as the adhesive force adjusting agent. One of the adhesive force adjusting agents may be used alone or two or more may be used in combination.

The amount of the adhesive force adjusting agent blended in the second resin layer may be adjusted to have a total metal content of magnesium elements and potassium elements of 25 ppm or more, for example, being 0.01 parts by mass or more and 0.15 parts by mass or less, preferably 0.012 parts by mass or more and 0.08 parts by mass or less, relative to 100 parts by mass of the thermoplastic resin.

Although the first resin layer may contain an adhesive force adjusting agent, it is preferable that the first resin layer contain no adhesive force adjusting agent. In the case where the adhesive force adjusting agent is contained, the content of the adhesive force adjusting agent in the first resin layer may be small, for example, less than 0.005 parts by mass, preferably less than about 0.002 parts by mass, relative to 100 parts by mass of the thermoplastic resin.

[Light emitting material]

At least one of the first and second resin layers may contain a light emitting material, and it is preferable that the first resin layer contain a light emitting material. With at least one of the first and second resin layers containing a light emitting material, the interlayer film can be a light emitting interlayer film that emits light upon irradiation with excitation light.

The light emitting material may be any material that emits light upon irradiation with excitation light. For example, a lanthanoid complex, a light emitting material having a terephthalic acid ester structure, a light emitting material having a naphthalimide skeleton, a light emitting material having a coumarin skeleton, a light emitting material having a quinoline skeleton and the like may be used. One of the light emitting materials may be used alone or two or more may be used in combination. By combining a plurality of light emitting materials having different emission wavelengths, not only a single color image but also an image in which various colors are combined may be displayed.

Among the light emitting materials described above, a light emitting material having a terephthalic acid ester structure is preferred. It is more preferable that the first resin layer contain a light emitting material having a terephthalic acid ester structure. In the resin layer, the light emitting material having a terephthalic acid ester structure coexisting with a certain amount or more of metal elements such as magnesium elements and potassium elements, particularly magnesium elements may cause yellowing or increase in haze value of the resin layer in some cases. However, as described above, the first resin layer has only a small content of magnesium elements, and preferably has also a small total content of magnesium element and potassium element. Therefore, even when the first resin layer contains a light emitting material having a terephthalic acid ester structure, yellowing and an increase in haze value may be prevented.

Further, since a plastic layer is arranged between the first and second resin layers, migration of the light emitting material from the first resin layer to the second resin layer is prevented. Therefore, even when the first resin layer contains a light emitting material having a terephthalic acid ester structure, the light emitting material is prevented from migrating to the second resin layer, so that yellowing and increase in haze value in the second resin layer may be also prevented. Further, migration of magnesium elements and potassium elements from the second resin layer to the first resin layer is also prevented, so that occurrence of yellowing and increase in the haze value in the first resin layer may be also prevented.

The content of the light emitting material in each resin layer may be appropriately adjusted corresponding to the type of the light emitting material, the desired light emitting intensity, etc., and for example, 0.01 parts by mass or more and 2.0 parts by mass or less, preferably 0.1 parts by mass or more and 1.0 part by mass or less, relative to 100 parts by mass of the thermoplastic resin, though not particularly limited.

As described above, in the present invention, it is preferable that the first resin layer contain a light emitting material having a terephthalic acid ester structure. In the first resin layer, the content of the light emitting material having a terephthalic acid ester structure is preferably 2.0 parts by mass or less, more preferably 1.5 parts by mass or less, still more preferably 1.2 parts by mass or less, and further more preferably 1 part by mass or less, relative to 100 parts by mass of the thermoplastic resin. With a content equal to or less than these upper limits, the transparency of the interlayer film is improved, so that the visible light transmittance increases, and further, increase in haze value due to the influence of the light emitting material may be prevented.

The content of the light emitting material having a terephthalic acid ester structure in the first resin layer is preferably 0.01 parts by mass or more, more preferably 0.1 parts by mass or more, still more preferably 0.15 parts by mass or more, and further more preferably 0.2 parts by mass or more, relative to 100 parts by mass of the thermoplastic resin in the first resin layer. With a content of the light emitting material equal to or more than these lower limits, a desired image or the like may be displayed with good visibility upon irradiation with excitation light.

Further, it is preferable that the second resin layer contain substantially no light emitting material having a terephthalic acid ester structure from the viewpoint of preventing yellowing and increase in haze value due to the light emitting material. Incidentally, containing substantially no light emitting material having a terephthalic acid ester structure means that the second resin layer may contain the light emitting material inevitably and unintentionally mixed to an extent that no yellowing and no increase in the haze value occur due to the inclusion of the light emitting material. For example, relative to 100 parts by mass of the thermoplastic resin in the second resin layer, about less than 0.01 parts by mass of the light emitting material may be contained, though 0 part by mass is preferred.

The light emitting material having the terephthalic acid ester structure may be any material that emits light upon irradiation with excitation light. Examples of the light emitting material having a terephthalic acid ester structure include a compound having a structure represented by the following general formula (1) and a compound having a structure

represented by the following general formula (2). One of these may be used alone or two or more may be used.

[Chemical Formula 1]

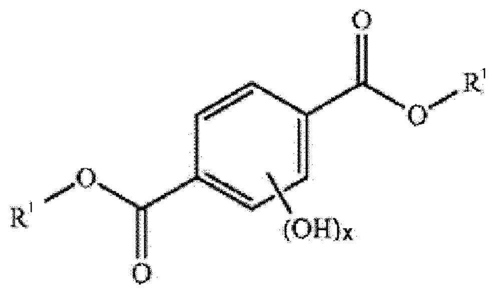

(1)

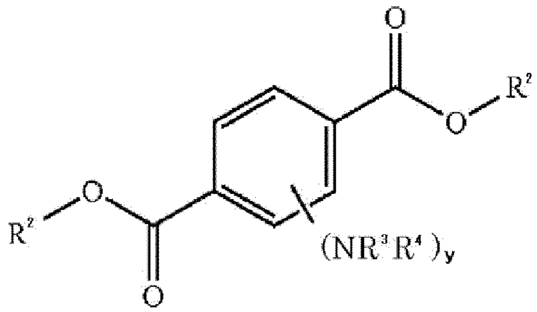

(2)

In the general formula (1), $R^1$ represents an organic group, and x is 1, 2, 3 or 4.

From the viewpoint of increasing the visible light transmittance of the interlayer film, x is preferably 1 or 2, and x is more preferably 2. Further, it is more preferable that the benzene ring have a hydroxyl group at a 2-position or a 5-position of the benzene ring, and it is still more preferable that the benzene ring have a hydroxyl group at a 2-position and a 5-position.

The organic group $R^1$ is preferably a hydrocarbon group, more preferably a hydrocarbon group having 1 to 10 carbon atoms, still more preferably a hydrocarbon group having 1 to 5 carbon atoms, and particularly preferably a hydrocarbon group having 1 to 3 carbon atoms. In the case where the hydrocarbon group has 10 or less carbon atoms, the light emitting material having the terephthalic acid ester structure may be easily dispersed in the resin layer. It is preferable that the hydrocarbon group be an alkyl group.

Examples of the compound having a structure represented by the general formula (1) include diethyl-2,5-dihydroxyterephthalate and dimethyl-2,5-dihydroxyterephthalate. In particular, it is preferable that the compound having a structure represented by the general formula (1) be diethyl-2,5-dihydroxylterephthalate.

In the general formula (2), $R^2$ represents an organic group, $R^3$ and $R^4$ represent a hydrogen atom or an organic group, and y is 1, 2, 3 or 4.

The organic group $R^2$ is preferably a hydrocarbon group, more preferably a hydrocarbon group having 1 to 10 carbon atoms, still more preferably a hydrocarbon group having 1 to 5 carbon atoms, and particularly preferably a hydrocarbon group having 1 to 3 carbon atoms. In the case where the number of carbon atoms in the hydrocarbon group is equal to or less than the upper limit described above, the light emitting material having the terephthalic acid ester structure may be easily dispersed in the resin layer. It is preferable that the hydrocarbon group be an alkyl group.

In the general formula (2), the organic groups $R^3$ and $R^4$ are, for example, hydrocarbon groups having 1 to 10 carbon atoms, and the organic groups are preferably hydrocarbon groups having 1 to 5 carbon atoms, more preferably hydrocarbon groups having 1 to 3 carbon atoms, and the hydrocarbon groups are preferably alkyl groups. Further, it is preferable that both $R^3$ and $R^4$ are hydrogen atoms. It is preferable that y be 1 or 2, and it is more preferable that y be 2. Further, it is more preferable that the benzene ring have $NR^3R^4$ at a 2-position or a 5-position, and it is still more preferable that the benzene ring have $NR^3R^4$ at a 2-position and a 5-position.

As the compound having a structure represented by the general formula (2), diethyl-2,5-diaminoterephthalate is preferred.

[Heat shielding particles]

At least one of the first and second resin layers may contain heat shielding particles, and it is preferable that the first resin layer contain heat shielding particles. Due to inclusion of heat shielding particles in at least one of the first and second resin layers, the heat shielding property of the interlayer film may be enhanced.
The first and second resin layers may each contain a light emitting material, and each of the first and second resin layers may contain heat shielding particles in addition to the light emitting material. Of course, each of the first and second resin layers may contain only one of the light emitting material and the heat shielding particles, or may not contain both.
The heat shielding particles are materials capable of absorbing infrared rays having a wavelength of 780 nm or more, that is, heat rays. The heat shielding particles are made of inorganic material, and specific examples thereof include metal oxide particles and particles other than metal oxide particles such as lanthanum hexaboride (LaB6) particles. Examples of the metal oxide particles include tin oxide particles such as aluminum-doped tin oxide particles, indium-doped tin oxide particles, and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), and tungsten oxide particles such as thallium-doped tungsten oxide particles, and rubidium-doped tungsten oxide particles. Further, heat shielding particles other than these may be used. One of the heat-shielding particles may be used alone or two or more may be used in combination.
Among these, metal oxide particles are preferred due to high heat ray shielding function. Use of at least one selected from the group consisting of ATO particles, GZO particles, ITO particles and CWO particles is more preferred, and use of ITO particles is still more preferred.
The preferable lower limit of the average particle size of the heat shielding particles is 10 nm, the more preferable lower limit is 20 nm, the preferable upper limit is 100 nm, the more preferable upper limit is 80 nm, and the still more preferable upper limit is 50 nm. With an average particle size equal to or more than the preferable lower limit, the heat ray shielding properties may be sufficiently enhanced. Further, with an average particle size equal to or less than the preferable upper limit, visible light rays are hardly shieled by the heat shielding particles, so that the visible light transmittance of the interlayer film is easily increased.
Incidentally, "average particle size" indicates the volume average particle size. The average particle size may be measured using a particle size distribution measuring apparatus ("UPA-EX150" manufactured by Nikkiso Co., Ltd.) or the like.
In the case where the first resin layer contains heat shielding particles, the content of the heat shielding particles in the first resin layer is preferably 0.005 mass% or more and 2.0 mass% or less, more preferably 0.01 mass% or more and 1.5 mass% or less, and still more preferably 0.04 mass% or more and 1.0 mass% or less. With a content of the heat shielding particles within these ranges, the heat shielding properties of the interlayer film may be improved without lowering the visible light transmittance and the like.
In the case where the second resin layer contains heat shielding particles, the content of the heat shielding particles in the second resin layer is the same as that shown in the first resin layer, though the second resin layer may contain substantially no heat shielding particles. Incidentally, containing substantially no heat shielding particles means that the second resin layer may contain the heat shielding particles to an extent that the heat shielding particles are inevitably and unintentionally mixed. For example, the second resin layer may contain about less than 0.005 mass% of the heat shielding particles, though preferably 0 mass%.

[Phosphoric acid ester compound]

Although at least one of the first and second resin layers may contain a phosphoric acid ester compound, among these, it is preferable that the first resin layer contain a phosphoric acid ester compound.
In the case where magnesium elements and potassium elements in a certain amount or more are blended in combination with a phosphoric acid ester compound in the resin layer, the adhesive force is enhanced even in a low humidity environment, so that the effect for improving the penetration resistance may be hardly obtained. However, as described above, the first resin layer has only a small content of magnesium elements, preferably only a small total content of magnesium element and potassium element. Therefore, even with inclusion of a phosphoric acid ester compound in the first resin layer, the adhesive force to the glass sheet is prevented from increasing due to the influence of the phosphoric acid ester compound, so that the penetration resistance is not lowered.
The phosphoric acid ester compound is used as a dispersant, and specifically, is used to disperse the heat shielding particles described above and a colorant such as a pigment and a dye described below. In the case where a

phosphoric acid ester compound is used, the heat shielding particles, a colorant, etc. may be dispersed in a plasticizer and then added to a thermoplastic resin. For example, heat shielding particles, a colorant, etc. may be added to a plasticizer, and a dispersant, etc. may be further added thereto so as to be dispersed in the plasticizer, and then mixed with the thermoplastic resin.

Examples of the phosphoric acid ester compound include trioctyl phosphate, triisopropyl phosphate, tributoxyethyl phosphate, tricresyl phosphate, isodecylphenyl phosphate, polyoxyethylene nonylphenyl ether phosphate, polyoxyethylene octylphenyl ether phosphate, and other polyoxyalkylene alkyl phenyl ether phosphate such as polyoxyethylene alkyl phenyl ether phosphoric acid ester, polyoxyethylene alkyl ether phosphoric acid ester, and alkyl ether phosphoric acid ester. These may be used singly or in combination of two or more.

In the case where the first resin layer contains a phosphoric acid ester compound, the content of the phosphoric acid ester compound in the first resin layer is, for example, 0.0001 mass% or more and 1 mass% or less, preferably 0.0005 mass% or more and 0.5 mass% or less, and more preferably 0.001 mass% or more and 0.1 mass% or less. With a content within the range, the heat shielding particles and the like may be easily dispersed in the first resin layer without using the phosphoric acid ester compound more than necessary. In the case where the first resin layer contains a phosphoric acid ester compound, it is more preferable that the first resin layer further contain heat shielding particles.

The second resin layer may contain a phosphoric acid ester compound as described above, though it is preferable that the second resin layer contain substantially no phosphoric acid ester compound. The second resin layer which contains substantially no phosphoric acid ester compound prevents the adhesive force to a glass sheet from increasing in a low humidity environment, so that the penetration resistance is easily improved in both low humidity and high humidity environments.

Incidentally, containing substantially no phosphoric acid ester compound means that the second resin layer may inevitably and unintentionally contain the phosphoric acid ester compound to an extent that the penetration resistance is not lowered in a low humidity and high humidity environments. Therefore, the second resin layer may contain the phosphoric acid ester compound at a content of, for example, about less than 0.01 mass%, preferably less than 0.001 mass%, more preferably less than 0.0005 mass%, and still more preferably less than 0.0001 mass%. However, the content of the phosphoric acid ester compound in the second resin layer is further more preferably 0 mass%.

[Plasticizer]

The first resin layer of the present invention may contain a plasticizer. Further, the second resin layer may contain a plasticizer. The first and second resin layers containing a plasticizer is flexible, so that the flexibility of the interlayer film may be improved and the penetration resistance and impact resistance of the laminated glass are improved. Furthermore, high adhesiveness to glass may be exhibited.

Containing a plasticizer is particularly effective in the case where a polyvinyl acetal resin is used as the thermoplastic resin. Therefore, in the case where each of the first and second resin layers contains a polyvinyl acetal resin, it is preferable that each further contain a plasticizer.

Examples of the plasticizer include an organic ester plasticizer such as a monobasic organic acid ester and a polybasic organic acid ester.

Examples of the monobasic organic acid ester include an ester of a glycol and a monobasic organic acid. Examples of the glycol include a polyalkylene glycol including alkylene units each having 2 to 4 carbon atoms, preferably 2 or 3 carbon atoms, in which the number of repetitions of the alkylene unit is 2 to 10, preferably 2 to 4. Alternatively, the glycol may be a monoalkylene glycol having 2 to 4 carbon atoms, preferably 2 or 3 carbon atoms, having a repeating unit of 1.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specifically, butyric acid, isobutyric acid, caproic acid, 2-ethylbutyric acid, 2-ethylpentanoic acid, heptylic acid, n-octylic acid, 2-ethylhexanoic acid, n-nonylic acid, and decylic acid.

Specific examples of the monobasic organic acid ester include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, and 1,2-butylene glycol di-2-ethylbutyrate.

Examples of the polybasic organic acid ester include an ester compound of a dibasic organic acid having 4 to 12 carbon atoms such as adipic acid, sebacic acid and azelaic acid and an alcohol having 4 to 10 carbon atoms. The

alcohol having 4 to 10 carbon atoms may have a linear structure, a branched structure, or a cyclic structure.

Specific examples thereof include dibutyl sebacate, dioctyl azelate, dihexyl adipate, dioctyl adipate, hexylcyclohexyl adipate, diisononyl adipate, heptylnonyl adipate, dibutylcarbitol adipate, and a mixed-type adipic acid ester. Alternatively, an oil-modified sebacic acid alkyd or the like may be used. Examples of the mixed-type adipic acid ester include an adipic acid ester prepared from two or more alcohols selected from the group consisting of an alkyl alcohol having 4 to 9 carbon atoms and a cyclic alcohol having 4 to 9 carbon atoms.

One of the plasticizers may be used alone or two or more may be used in combination.

Among the plasticizers described above, an ester of a glycol and a monobasic organic acid is preferred, and triethylene glycol-di-2-ethylhexanoate (3GO) is particularly preferably used.

The content of the plasticizer in each of the first and second resin layers is not particularly limited, and preferably 20 parts by mass or more and 80 parts by mass or less relative to 100 parts by mass of the thermoplastic resin. With a content of the plasticizer of 20 parts by mass or more, the laminated glass is made moderately flexible and the penetration resistance and the like are improved. With a content of the plasticizer of 80 parts by mass or less, the plasticizer is prevented from being separated from each of the resin layers. The content of the plasticizer is more preferably 30 parts by mass or more, still more preferably 35 parts by mass or more, and more preferably 70 parts by mass or less, still more preferably 63 parts by mass or less.

In each of the first and second resin layers, the thermoplastic resin, or the thermoplastic resin and the plasticizer are the main components, and the total content of the thermoplastic resin and the plasticizer based on the total amount of each resin layer is usually 70 mass% or more, preferably 80 mass% or more, more preferably 90 mass% or more and less than 100 mass%.

[Other additives]

The first resin layer and the second resin layer each may further contain a colorant such as dye and pigment, an ultraviolet absorber, an antioxidant, a light stabilizer, a fluorescent whitening agent, a crystal nucleating agent, on an as needed basis.

[Plastic layer]

As described above, the interlayer film of the present invention contains a plastic layer between the first and second resin layers. Due to containing the plastic layer, the interlayer film has enhanced mechanical strength and improved penetration resistance.

The plastic layer also functions as a barrier layer for preventing the additives contained in one resin layer from migrating to the other resin layer. For example, in the case where the first resin layer contains at least one of a light emitting material, heat shielding particles, and a phosphoric acid ester compound, these may be prevented from migrating to the second resin layer. Further, magnesium elements and potassium elements contained in the second resin layer are prevented from migrating to the first resin layer, so that excellent penetration resistance may be surely maintained for a long period of time.

The plastic layer is preferably made of various resin films, and examples thereof include a polyester resin film and an acrylic resin film.

The acrylic resin film is a resin film of which the resin is made of acrylic resin, and the acrylic resin is preferably an acrylic polymer containing a structural unit derived from a hydroxyl group-containing (meth)acrylate, and specifically, polyhydroxypropyl methacrylate (HPMA resin), polyhydroxyethyl methacrylate (HEMA resin), etc. are preferred. Further, the polyester resin film is a resin film of which the resin is made of polyester resin, and is preferably a PET film, in which the polyester resin used is polyethylene terephthalate (PET).

Among the above, a PET film is preferred as the resin film. The polyethylene terephthalate used for the PET film may be modified PET, and for example, cyclohexanedimethylene-modified PET (PETG) is preferred.

Although the resin film which constitutes the plastic layer may be made of the resin alone, additives may be added thereto as long as the function of the resin film is not impaired. Examples of the additive include an ultraviolet absorber, an antioxidant, a light stabilizer, a fluorescent whitening agent, a crystal nucleating agent.

Further, it is preferable that the plastic layer contain substantially no plasticizer. Due to containing no plasticizer, the plastic layer easily functions as a barrier layer, so that additives such as a light emitting material, a phosphoric acid ester compound, and heat shielding particles, and metal elements such as magnesium elements and potassium elements are more effectively prevented from migrating from one resin layer to the other resin layer. In particular, in the case where both the first and second resin layers contain a plasticizer, migration of additives and metal elements is likely to occur. Accordingly, it is preferable that both the first and second layers contain a plasticizer while the plastic layer contains substantially no plasticizer.

"Containing substantially no plasticizer" means that the plasticizer may be contained at a level as long as the

function of the plastic layer is not impaired, and for example, an unintentionally and inevitably incorporated plasticizer may be contained. The content of the plasticizer in the plastic layer may be, for example, less than 2 parts by mass, preferably less than 1 part by mass, still more preferably less than 0.5 parts by mass, and most preferably 0 part by mass, relative to 100 parts by mass of the thermoplastic resin.

Further, the plastic layer may be made of a single layer of a resin film or may be made of a plurality of resin films, and in any case, the plastic layer preferably contains at least one of a polyester resin film and an acrylic resin film, more preferably contains a PET film, and it is still more preferable that the plastic layer be made of a PET film alone.

Further, a metal foil, a metal oxide layer, or the like may be appropriately laminated on the plastic layer, and in the interlayer film, a laminate including the metal foil, the metal oxide, or the like laminated on the plastic layer may be disposed between the first and the second resin layers. Examples of the metal which constitutes the metal foil include aluminum, copper, silver, gold, palladium, and alloys containing these.

In the interlayer film of the present invention, the first resin layer, the plastic layer, and the second resin layer are not particularly limited as long as they are superimposed with each other. For example, the interlayer film may be a laminated film including a first resin layer, a plastic layer, and a second resin layer which are laminated and integrated. Alternatively, the interlayer film may include the first resin layer, the plastic layer, and the second resin layer which are superimposed to an extent separable from each other. Of course, the interlayer film may be disposed between two laminated glasses as described later.

[Laminated glass]

In the present invention, as shown in Fig. 2, a laminated glass 20 includes a first glass sheet 21, a second glass sheet 22, and an interlayer film 10 disposed between the first glass sheet 21 and the second glass sheet 22. In the laminated glass, the first glass sheet 21 and the second glass sheet 22 are adhered to each other through the interlayer film 10. On this occasion, it is preferable that the first resin layer 11 be disposed in contact with the first glass sheet 21, and the second resin layer 12 be disposed in contact with the second glass sheet 22.

The first and second glass sheets used for the laminated glass may be any one of inorganic glass and organic glass. The inorganic glass is not particularly limited, and examples thereof include clear glass, float sheet glass, polished sheet glass, figured sheet glass, wire-meshed sheet glass, wire-lined sheet glass, and green glass.

As the organic glass, what is generally called resin glass is used, and examples thereof include organic glass made of resin such as polycarbonate, acrylic resin, acrylic copolymer resin, and polyester, etc., though not particularly limited.

The two glass sheets may be made of the same type of material from each other, or may be made of different materials. For example, one may be inorganic glass and the other may be organic glass. However, it is preferable that both of the two glass sheets be made of inorganic glass or organic glass, and it is more preferable in the present invention that the two glass sheets are made of inorganic glass.

The thickness of each glass sheet is, for example, about 0.1 to 15 mm, preferably 0.5 to 5 mm, though not particularly limited. The thickness of each glass sheet may be the same or different from each other, preferably the same.

[Use of laminated glass]

The laminated glass of the present invention is used, for example, as a window glass, and more specifically, may be used for a window glass of various vehicles such as automobiles, trains, ships, and aircrafts, and various architectures such as buildings, condominiums, detached houses, halls, and gymnasiums.

It is preferable that laminated glass be used for vehicle window glass, particularly for automobile window glass. Further, in the case where the laminated glass contains a light emitting material, for example, by irradiating the interlayer film with excitation light from indoor side (in the case of automobiles, inside of the vehicle), various images may be displayed due to light emission of the interlayer film.

The window glass for automobiles may be any of a windshield, a rear glass, a side glass, and a roof glass, and use as a windshield is preferred. Use of a laminated glass having a light emitting material as windshield allows suitable use for HUD applications.

[Production method of interlayer film and laminated glass]

The first and second resin layers may be formed of resin composition including materials which constitute each of the resin layers, for example, such as a thermoplastic resin and a light emitting material, a plasticizer, heat shielding particles, a phosphoric acid ester compound, an adhesive force adjusting agent, and other additives which are added on an as needed basis. The first and second resin layers may be formed by extrusion molding, press molding, or the like of a resin composition obtained by kneading the materials constituting each of the resin layers. The plastic layer

may also be formed by extrusion molding, press molding, or the like of the resin constituting the plastic layer.

The interlayer film of the present invention may be produced by preparing a first resin layer, a plastic layer, and a second resin layer, superimposing the layers, and thermocompression bonding the superimposed layers. Alternatively, the production may be performed by a co-extrusion method including preparing two or more extruders and attaching a multi-layer feed block to the tip of the extruders.

The laminated glass may be produced by laminating each of the layers which constitute an interlayer film between two glass sheets and thermocompression bonding the laminate. Alternatively, the laminated glass may be produced by thermocompression bonding an interlayer film prepared in advance and disposed between two glass sheets.

Alternatively, the production may be performed by laminating an interlayer film on one glass sheet in advance, superimposing the glass sheet with the interlayer film laminated on another glass sheet, and then through thermocompression bonding.

[Laminate for laminated glass]

Further, in the present invention, an interlayer film may be formed by preparing a laminate for laminated glass having two layers among three layers including a first resin layer, a plastic layer, and a second resin layer in advance, and superimposing the laminate for laminated glass on one remaining layer. Hereinafter, the laminate for laminated glass used for such applications will be described in detail.

Examples of the laminate for laminated glass include a laminate for laminated glass having a plastic layer and a second resin layer laminated on one surface of the plastic layer (hereinafter, also simply referred to as laminate (X)). Laminate (X) is used to be superimposed on a first resin layer so that an interlayer film is formed.

Here, the second resin layer in laminate (X) contains a thermoplastic resin with a total metal content of magnesium elements and potassium elements of 25 ppm or more, and the details thereof are as described above. Further, the first resin layer to be laminated on laminate (X) contains a thermoplastic resin and has a thickness of 900 μm or less, with a magnesium element content of less than 25 ppm and preferably a total metal content of magnesium elements and potassium elements of less than 25 ppm, and the details are as described above.

Laminate (X) is superimposed on the first resin layer such that the plastic layer is disposed between the first and second resin layers, so that an interlayer film is formed. In the present invention, the interlayer film formed in that manner satisfies requirements to have a mean break height (MBH) of 5 m or more in a falling ball test conducted in accordance with JIS R 3212: 2015 for two glass sheets each having a thickness of 2.5 mm laminated via the interlayer film, in both cases with a water content of the interlayer film of 0.4% and 2.0%.

Examples of the laminate for laminated glass include a laminate for laminated glass comprising a plastic layer and a first resin layer laminated on one surface of the plastic layer (hereinafter, also simply referred to as laminate (Y)). Laminate (Y) is used to be superimposed on a second resin layer so that an interlayer film is formed.

The first resin layer in laminate (Y) contains a thermoplastic resin, having a thickness of 900 μm or less, and having a magnesium element content of less than 25 ppm, and preferably a total metal content of magnesium elements and potassium elements of less than 25 ppm. The details thereof are as described above. The second resin layer to be superimposed on laminate (Y) contains a thermoplastic resin with a total metal content of magnesium elements and potassium elements of 25 ppm or more. The details thereof are as described above.

Laminate (Y) is superimposed on the second resin layer such that the plastic layer is disposed between the first and second resin layers, so that an interlayer film is formed. In the present invention, the interlayer film formed in that manner satisfies requirements to have a mean break height (MBH) of 5 m or more in a falling ball test conducted in accordance with JIS R 3212: 2015 for two glass sheets each having a thickness of 2.5 mm laminated via the interlayer film, in both cases with a water content of the interlayer film of 0.4% and 2.0%.

Laminate (X) may be superimposed on the first resin layer and disposed between the first and second glass sheets, such that a laminated glass is produced by thermocompression bonding or the like. In the same manner, laminate (Y) may be superimposed on the second resin layer and disposed between the first and second glass sheets, such that a laminated glass is produced by thermocompression bonding or the like.

Laminate (X) or (Y) may be laminated on one of the glass sheets which constitute the laminated glass. In the case where laminate (X) or (Y) is laminated on a glass sheet, the glass sheet on which the laminate is laminated may be superimposed on the first resin layer or second resin layer and the other glass sheet, and then thermocompression bonded to produce a laminated glass. With such configurations, the laminated glass is easily produced. In this case, the first resin layer to be superimposed on laminate (X) or the second resin layer to be superimposed on laminate (Y) may also be laminated on the other glass sheet.

Of course, laminate (X) or laminate (Y) is not laminated on the glass sheet in advance in some cases. In this case, the first resin layer to be superimposed on laminate (X) or the second resin layer to be superimposed on laminate (Y) is laminated on the other glass sheet in some cases, or is not laminated in some cases.

Examples

The present invention will be described in more detail with reference to Examples, though the present invention is not limited thereto.

[Metal content]

Each of the first and second resin layers in an amount of 0.3 g was collected, to which 6 mL of nitric acid was added for dissolution. After dissolution, the volume was set to 50 mL with ultra-pure water, and contents (mass ppm) of each of magnesium elements and potassium elements were measured by ICP emission spectroscopy. The total content thereof is the total content of magnesium element and potassium element. The measurement conditions for ICP emission spectroscopy were as follows.

<Measurement conditions>

Measuring device: "ICPE-9000" manufactured by Shimadzu Corporation
High frequency output: 1.2 kW
Plasma gas flow rate: 10 L/min
Auxiliary gas flow rate: 0.6 L/min
Carrier gas flow rate: 0.7 L/min

[Falling ball test]

The interlayer film obtained in each of Examples and Comparative Examples was held in a thermostatic chamber at 23±2°C for 1 hour or more so as to have a water content of 0.4 mass%.

Then, two clear glass sheets (a length of 300 mm, a width of 300 mm, and a thickness of 2.5 mm, in accordance with JIS R 3211 (1998)) were prepared, and an interlayer film was placed between the two clear glass sheets to form a laminate. The resulting laminate was transferred into a rubber bag, and the rubber bag was connected to a suction decompression system. The laminate was heated at an ambient air heating temperature, and at the same time held under a reduced pressure of -600 mmHg (absolute pressure: 160 mmHg) for 10 minutes, such that the temperature of each laminate (preliminary compression bonding temperature) came to 60°C. Then, the pressure was returned to atmospheric pressure and temporary compression bonding was performed. The temporarily compression bonded laminate was held in an autoclave under conditions at a temperature of 140°C and a pressure of 1.3 MPa for 10 minutes, and then the temperature was lowered to 50°C and the pressure was returned to atmospheric pressure to complete final compression bonding. As a result, a laminated glass was obtained.

In a falling ball test of the resulting laminated glass in accordance with JIS R 3212: 2015, it was checked whether or not the ball falling from a height (MBH) of 5 m penetrated through the laminated glass. In the case where the ball did not penetrate through the laminated glass, the laminated glass was evaluated as "A", and in the case where the ball penetrated through the laminated glass, the laminated glass was evaluated as "B".

Further, the interlayer film obtained in each Example and Comparative Example was held in a thermostatic chamber at 50°C and a relative humidity of 95% for 40 minutes so as to have a water content of 2.0 mass%. Immediately after that, a laminated glass was prepared in the same manner as described above, and the laminated glass thus prepared was subjected to a falling ball test for evaluation.

The water content was checked by the following method.

(Water content)

A weighing bottle was dried in a thermostatic dryer for 3 hours. The weighting bottle was left in a desiccator for 30 minutes, and then weight X of the weighing bottle was measured with a balance. Then, the interlayer film was placed in the weighing bottle, and weight A of the weighing bottle containing the interlayer film was measured. Then, the weighing bottle containing the interlayer film was dried under reduced pressure in a vacuum dryer at 50°C and a reduced pressure of 700 mm/ng for 2 hours, and allowed to cool in a desiccator for 20 minutes. After allowing to cool, weight B of the weighing bottle containing the interlayer film was measured with a balance. From weight A and weight B, the water content was determined by the following formula:

$$\text{Water content}=(A-B)/(A-X)\times 100.$$

[YI value]

Using a spectrophotometer ("U-4100" manufactured by Hitachi High-Tech Corporation), YI value (yellowness, yellow index) of the resulting interlayer film was measured in accordance with JIS Z 8722. A YI value of 10 or less was evaluated as "A", and a YI value of more than 10 was evaluated as "B".

The following components and materials were used in Examples and Comparative Examples.

(Resin)

PVB: polyvinyl butyral resin, acetalization degree: 68.5 mol%, hydroxyl group content: 30.5 mol%, acetylation degree: 1.0 mol%, average degree of polymerization: 1700

(Plasticizer)

3GO: triethylene glycol di-2-ethylhexanoate

(Light emitting material)

terephthalic acid ester: diethyl-2,5-dihydroxyterephthalate (Heat shielding particles)
ITO: tin-doped indium oxide particles (ITO particles), average particle diameter: 30 nm

(Phosphoric acid ester)

Plysurf A208B (manufactured by DKS Co., Ltd.)

(Adhesive force adjusting agent)

Adhesive force adjusting agent (1): magnesium acetate
Adhesive force adjusting agent (2): Potassium acetate

(Plastic layer)

PET: PET film, product name "Lumiler 100-U34", manufactured by Toray Industries, Inc.

[Example 1]

A resin composition obtained by mixing 100 parts by mass of a polyvinyl butyral resin and 40 parts by mass of a plasticizer was extruded by a twin-screw anisotropic extruder to prepare a first resin layer having a thickness of 380 μm. Further, a resin composition obtained by mixing 100 parts by mass of a polyvinyl butyral resin, 40 parts by mass of plasticizer, and 0.032 parts by mass of an adhesive adjusting agent (1) was extruded by a twin-screw anisotropic extruder to prepare a second resin layer having a thickness of 380 μm and a total metal content of 50 ppm in the second resin layer. Further, a PET film as plastic layer having a thickness of 50 μm was prepared. The first resin layer, the PET film, and the second resin layer were superimposed to prepare an interlayer film.

[Example 2]

The procedure was performed in the same manner as in Example 1, except that the amount of adhesive force adjusting agent (1) blended in the second resin layer was changed to 0.019 parts by mass, the total metal content in the second resin layer was adjusted to 30 ppm, and the thickness of the second resin layer was changed to 760 μm.

[Example 3]

The procedure was performed in the same manner as in Example 1, except that the thickness of the plastic layer was changed to 100 μm.

[Example 4]

The procedure was performed in the same manner as in Example 3, except that the adhesive force adjusting agent in the second resin layer was changed to adhesive force adjusting agent (2) and the amount thereof blended was changed to 0.065 parts by mass such that the total metal content in the second resin layer came to 100 ppm.

[Example 5]

The procedure was performed in the same manner as in Example 1, except that the thickness of the plastic layer was changed to 200 μm.

[Example 6]

The procedure was performed in the same manner as in Example 1, except that the thickness of the second resin layer was changed to 500 μm.

[Example 7]

The procedure was performed in the same manner as in Example 1, except that to the resin composition to constitute the first resin layer, 0.5 parts by mass of a light emitting material was further added.

[Example 8]

To 40 parts by mass of a plasticizer, 0.2 mass% of heat shielding particles and 0.1 mass% of a phosphoric acid ester compound based on the entire amount of the first resin layer were added, and then the mixture was mixed with a horizontal microbead mill to obtain a mixed solution. Then, 0.1 parts by mass of acetylacetone was added to the mixed solution while stirring to prepare a dispersion. Subsequently, the entire amount of the resulting dispersion liquid was added to 100 parts by mass of a polyvinyl butyral resin, and the mixture was sufficiently melt-kneaded with a mixing roll and then extruded using an extruder to obtain a first resin layer having a thickness of 380 μm. Then, the same procedure was performed as in Example 1 to obtain an interlayer film.

[Comparative Example 1]

A resin layer was made in the same manner as the first resin layer in Example 1, and the resin layer was used as interlayer film.

[Comparative Example 2]

The procedure was performed in the same manner as in Comparative Example 1, except that the thickness was changed to 800 μm.

[Comparative Example 3]

A resin layer was made in the same manner as the second resin layer in Example 1 and the resin layer was used as interlayer film, except that the thickness was changed to 800 μm.

[Comparative Example 4]

Two sheets of resin layers same as the first resin layer in Example 1 were made, and superimposed to obtain an interlayer film.

[Comparative Example 5]

An interlayer film was made in the same manner as in Example 1, except that the plastic layer was omitted.

[Comparative Example 6]

Two sheets of resin layers same as the first resin layer in Example 1 were made, and the resin layer, a PET film as plastic layer, and the resin layer were superimposed in this order to obtain an interlayer film.

[Comparative Example 7]

Two sheets of resin layers same as the second resin layer in Example 1 were made, and the resin layer, a PET film as plastic layer, and the resin layer were superimposed in this order to obtain an interlayer film.

[Comparative Example 8]

The same procedure was performed as in Comparative Example 7, except that 0.5 parts by mass of a light emitting material was further added to the resin composition to constitute one resin layer.

[Comparative Example 9]

To 40 parts by mass of a plasticizer, 0.2 mass% of heat shielding particles and 0.1 mass% of a phosphoric acid ester compound based on the entire amount of the resin layer were added, and then the mixture was mixed with a horizontal microbead mill to obtain a mixed solution. Then, 0.1 parts by mass of acetylacetone was added to the mixed solution while stirring to prepare a dispersion. Subsequently, the entire amount of the resulting dispersion liquid and 0.0032 parts by mass of adhesive force adjusting agent (1) were added to 100 parts by mass of a polyvinyl butyral resin, and the mixture was sufficiently melt-kneaded with a mixing roll and then extruded using an extruder to obtain a resin layer having a thickness of 800 μm. The resin layer was used as the interlayer film.

[Table 1]

| | | Example | | | | | | | | Comparative Example | | | | | | | | |
|---|---|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 | 8 | 9 |
| First resin layer | Resin (part by mass) | 100 | 100 | 100 | 100 | 100 | 100 | 100 | 100 | 100 | 100 | 100 | 100 | 100 | 100 | 100 | 100 | 100 |
| | Plasticizer (part by mass) | 40 | 40 | 40 | 40 | 40 | 40 | 40 | 40 | 40 | 40 | 40 | 40 | 40 | 40 | 40 | 40 | 40 |
| | Magnesium content (ppm) | 2> | 2> | 2> | 2> | 2> | 2> | 2> | 2> | 2> | 2> | 50 | 2> | 2> | 2> | 50 | 50 | 50 |
| | Potassium content (ppm) | 2> | 2> | 2> | 2> | 2> | 2> | 2> | 2> | 2> | 2> | 2> | 2> | 2> | 2> | 2> | 2> | 2> |
| | Light emitting material (part by mass) | - | - | - | - | - | - | 0.5 | - | - | - | - | - | - | - | - | 0.5 | - |
| | Heat shielding particles (mass%) | - | - | - | - | - | - | - | 0.2% | - | - | - | - | - | - | - | - | 0.2% |
| | Phosphoric acid ester (mass%) | - | - | - | - | - | - | - | 0.1% | - | - | - | - | - | - | - | - | 0.1% |
| | Thickness ($\mu$m) | 380 | 380 | 380 | 380 | 380 | 380 | 380 | 380 | 380 | 800 | 800 | 380 | 380 | 380 | 380 | 380 | 800 |
| Plastic layer | Type | PET | PET | PET | PET | PET | PET | PET | PET | - | - | - | - | - | PET | PET | PET | - |
| | Thickness ($\mu$m) | 50 | 50 | 100 | 100 | 200 | 50 | 50 | 100 | - | - | - | - | - | 50 | 50 | 50 | - |
| Second resin layer | Resin (part by mass) | 100 | 100 | 100 | 100 | 100 | 100 | 100 | 100 | - | - | - | 100 | 100 | 100 | 100 | 100 | - |
| | Plasticizer (part by mass) | 40 | 40 | 40 | 40 | 40 | 40 | 40 | 40 | - | - | - | 40 | 40 | 40 | 40 | 40 | - |
| | Magnesium content (ppm) | 50 | 30 | 50 | 2> | 50 | 50 | 50 | 50 | - | - | - | 2> | 50 | 2> | 50 | 50 | - |
| | Potassium content (ppm) | 2> | 2> | 2> | 100 | 2> | 2> | 2> | 2> | - | - | - | 2> | 2> | 2> | 2> | 2> | - |
| | Thickness ($\mu$m) | 380 | 760 | 380 | 380 | 380 | 500 | 380 | 380 | - | - | - | 380 | 380 | 380 | 380 | 380 | - |

(continued)

| | | Example | | | | | | | | Comparative Example | | | | | | | | |
|---|---|---|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 | 7 | 8 | 9 |
| Falling ball (water content: 0.4%) | Whether satisfying MBH=5 or more in JIS3212 | A | A | A | A | A | A | A | A | B | B | A | B | B | B | A | A | B |
| Falling ball (water content: 2.0%) | | A | A | A | A | A | A | A | A | B | A | B | A | B | A | B | B | B |
| YI value | 10 or less | A | A | A | A | A | A | A | A | A | A | A | A | A | A | A | B | A |

*In Table 1, "parts by mass" is relative to 100 parts by mass of resin (PVB), and "mass%" is in each resin layer.
*In Table 1, "2>" means 2 ppm or less.

As shown in Examples, due to the interlayer film comprising the first and second resin layers and the plastic layer disposed therebetween, the first resin layer having a thickness of 900 μm or less and a magnesium content of less than 25 ppm, and the second resin layer having a total metal content of 25 ppm or more, the results of the falling ball test were improved to achieve excellent penetration resistance in both low and high humidity conditions. Further, in both Examples 7 and 8, although the interlayer film contains a light emitting material having a terephthalic acid ester structure or a phosphoric acid ester compound, due to the light emitting material being contained in the first resin layer having a low magnesium content and a low total metal content, no yellowing occurred in the interlayer film and no decrease in penetration resistance occurred.

On the other hand, in Comparative Examples 1 to 3 and 9, the interlayer film had a single-layer structure, and in Comparative Example 4, the two resin layers had the same composition, so that the first resin layer having a magnesium content of less than 25 ppm and the second resin layer having a total metal content of 25 ppm or more were not able to be provided. Therefore, in both low humidity and high humidity environments, no excellent results were achieved in the falling ball test and the penetration resistance was poor.

In Comparative Example 9, since a phosphoric acid ester compound was contained, the penetration resistance decreased in not only high humidity but also low humidity, despite the high total metal content. The reason is presumed that the function of magnesium elements for adjusting the adhesive force was inhibited by the phosphoric acid ester compound.

Further, in Comparative Example 5, although a first resin layer having magnesium content of less than 25 ppm and a second resin layer having a total metal content of 25 ppm or more were provided, due to having no plastic layer, migration of magnesium elements and potassium elements from the second resin layer to the first resin layer was unable to be prevented. As a result, in the laminated glass, a certain amount or more of metal elements such as magnesium elements were present also in the first resin layer, so that the penetration resistance was not improved in both low humidity and high humidity. Further, in Comparative Examples 6 to 8, although a plastic layer was provided, due to not having both a resin layer having a magnesium content of less than 25 ppm and a resin layer having a total metal content of 25 ppm or more, the penetration resistance was unable to be improved under both low humidity and high humidity. In Comparative Example 8, since the resin layer having a total metal content of 25 ppm or more contained a light emitting material, yellowing occurred, so that the YI value increased.

Reference Signs List

10: Interlayer film
11: First resin layer
12: Second resin layer
13: Plastic layer
20: Laminated glass
21: First glass sheet
22: Second glass sheet

## Claims

1. An interlayer film for laminated glass, comprising a first resin layer, a second resin layer, and a plastic layer disposed between the first and second resin layers, the first resin layer comprising a thermoplastic resin, and having a thickness of 900 μm or less, and a magnesium element content of less than 25 ppm, the second resin layer comprising a thermoplastic resin, and having a total content of magnesium element and potassium element of 25 ppm or more, and the interlayer film for laminated glass satisfying requirements to have a mean break height (MBH) of 5 m or more in a falling ball test conducted in accordance with JIS R 3212: 2015 for two glass sheets each having a thickness of 2.5 mm laminated via the interlayer film for laminated glass, in both cases with a water content of the interlayer film for laminated glass of 0.4% and 2.0%.

2. The interlayer film for laminated glass according to claim 1, wherein the first resin layer has a total content of magnesium element and potassium element of less than 25 ppm.

3. The interlayer film for laminated glass according to claim 2, wherein the first resin layer has a thickness of 800 μm or less and a total content of magnesium element and potassium element of 20 ppm or less.

4. The interlayer film for laminated glass according to any one of claims 1 to 3, wherein the second resin layer has a thickness of 900 μm or less.

5. The interlayer film for laminated glass according to any one of claims 1 to 4, wherein the second resin layer has a thickness of 100 μm or more.

6. The interlayer film for laminated glass according to any one of claims 1 to 5, wherein the second resin layer has a thickness of 350 μm or more and a total content of magnesium element and potassium element of 30 ppm or more.

7. The interlayer film for laminated glass according to any one of claims 1 to 6, wherein the plastic layer has a thickness of 30 μm or more and 200 μm or less.

8. The interlayer film for laminated glass according to any one of claims 1 to 7, wherein the first resin layer comprises a light emitting material having a terephthalic acid ester structure.

9. The interlayer film for laminated glass according to any one of claims 1 to 8, wherein the first resin layer comprises a phosphoric acid ester compound.

10. The interlayer film for laminated glass according to any one of claims 1 to 9, wherein the first resin layer comprises heat shielding particles.

11. The interlayer film for laminated glass according to any one of claims 1 to 10, wherein a difference between the total content in the first resin layer and the total content in the second resin layer is 10 ppm or more and 300 ppm or less.

12. The interlayer film for laminated glass according to any one of claims 1 to 11, wherein the thermoplastic resin contained in the first and second resin layers is a polyvinyl acetal resin.

13. The interlayer film for laminated glass according to any one of claims 1 to 12, wherein the plastic layer comprises a polyethylene terephthalate film.

14. A laminated glass comprising the interlayer film for laminated glass according to any one of claims 1 to 13, a first glass sheet, and a second glass sheet, wherein the interlayer film for laminated glass is disposed between the first glass sheet and the second glass sheet.

15. A laminate for laminated glass used for lamination on a first resin layer to form an interlayer film for laminated glass, the laminate comprising
a plastic layer and a second resin layer laminated on one surface of the plastic layer, the first resin layer comprising a thermoplastic resin, and having a thickness of 900 μm or less, and a magnesium element content of less than 25 ppm, the second resin layer comprising a thermoplastic resin, and having a total content of magnesium element and potassium element of 25 ppm or more, and the laminate for laminated glass satisfying requirements to have a mean break height (MBH) of 5 m or more in a falling ball test conducted in accordance with JIS R 3212: 2015 for two glass sheets each having a thickness of 2.5 mm laminated via the interlayer film for laminated glass formed by laminating the laminate for laminated glass on the first resin layer such that the plastic layer is disposed between the first and second resin layers, in both cases with a water content of the interlayer film for laminated glass of 0.4% and 2.0%.

16. A laminate for laminated glass used for lamination on a second resin layer to form an interlayer film for laminated glass, the laminate comprising a plastic layer and a first resin layer laminated on one surface of the plastic layer, the first resin layer comprising a thermoplastic resin, and having a thickness of 900 μm or less, and a magnesium element content of less than 25 ppm, the second resin layer comprising a thermoplastic resin, and having a total content of magnesium element and potassium element of 25 ppm or more, and the laminate for laminated glass satisfying requirements to have a mean break height (MBH) of 5 m or more in a falling ball test conducted in accordance with JIS R 3212: 2015 for two glass sheets each having a thickness of 2.5 mm laminated via the interlayer film for laminated glass formed by laminating the laminate for laminated glass on the second resin layer such that the plastic layer is disposed between the first and second resin layers, in both cases with a water content of the interlayer film for laminated glass of 0.4% and 2.0%.

Fig. 1

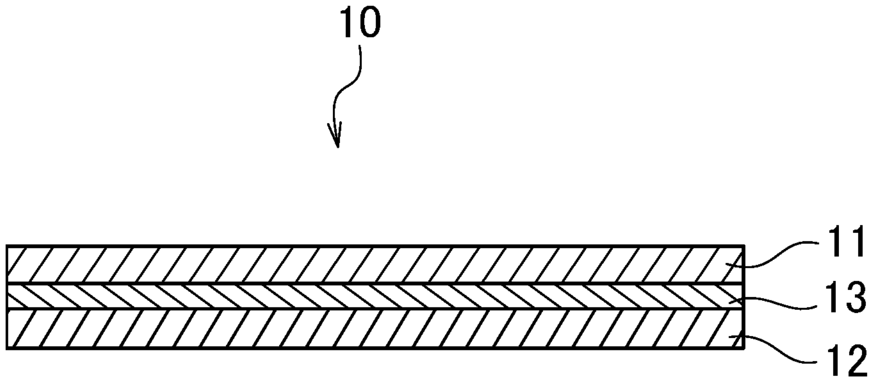


Fig. 2

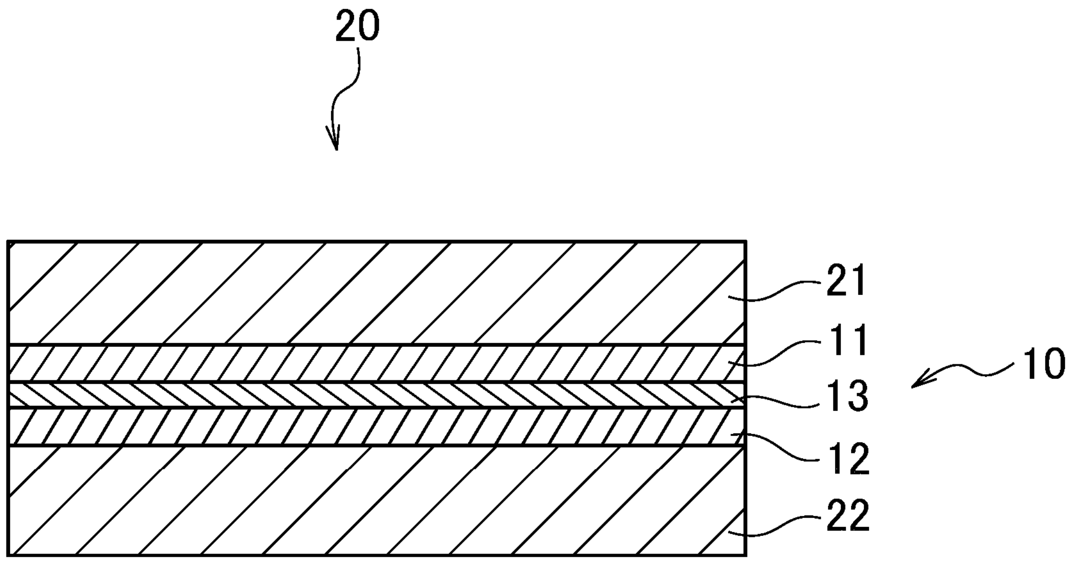

## INTERNATIONAL SEARCH REPORT

International application No.
**PCT/JP2021/033060**

**A. CLASSIFICATION OF SUBJECT MATTER**

***B32B 17/10***(2006.01)i; ***B32B 27/30***(2006.01)i; ***B32B 27/36***(2006.01)i; ***C03C 27/12***(2006.01)i
FI: C03C27/12 K; C03C27/12 D; B32B27/30 Z; B32B27/36; B32B17/10

According to International Patent Classification (IPC) or to both national classification and IPC

**B. FIELDS SEARCHED**

Minimum documentation searched (classification system followed by classification symbols)

B32B17/10; B32B27/30; B32B27/36; C03C27/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2015/087673 A1 (ASAHI GLASS CO LTD) 18 June 2015 (2015-06-18) claims, paragraphs [0028]-[0029], [0034], examples | 1-16 |
| Y | JP 2015-40167 A (SEKISUI CHEMICAL CO LTD) 02 March 2015 (2015-03-02) claims, paragraphs [0022], [0048]-[0049], example 1 | 1-16 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 October 2021** | **02 November 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/033060**

| Patent document cited in search report | Publication date (day/month/year) | Patent family member(s) | Publication date (day/month/year) |
|---|---|---|---|
| WO 2015/087673 A1 | 18 June 2015 | US 2016/0214361 A1<br>claims, paragraphs [0041]-[0042], [0048], examples<br>EP 3081545 A1 | |
| JP 2015-40167 A | 02 March 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014021407 A
- WO 2014021406 A
- JP 2015196612 A
- WO 2015115626 A